# EUROPEAN PATENT APPLICATION

(11) **EP 3 187 762 A1**
(43) Date of publication of application: **05.07.2017**
(21) Application number: 15835652.7
(22) Date of filing: 21.08.2015
(51) Int. Cl.: F16L 11/12, B41J 2/175

(54) **TUBE**

(30) Priority: 29.08.2014 JP 2014176521
(71) Applicant: Junkosha Inc., Kasama-shi, Ibaraki 309-1603 (JP)
(72) Inventor: YOTSUYA Masato, Kasama-shi Ibaraki 309-1603 (JP)
(74) Representative: Nordmeyer, Philipp Werner
(86) International application number: PCT/JP2015/073633
(87) International publication number: WO 2016/031738

(57) **Abstract**

Provided is a tube which can effectively protect a fluid inside thereof from influences of ultraviolet rays and through which the fluid can be viewed from an outside.

The tube includes an ultraviolet shielding in which a yellow organic pigment and an ultraviolet absorber of an inorganic compound are dispersed. The organic pigment and the ultraviolet absorber are dispersed so that a standard deviation **σ** of a concentration of the organic pigment and the ultraviolet absorber in the resin composition is 0.02% or less. In a light transmittance converted in terms of wall thickness when the tube is diluted 10 times in volume ratio, the light transmittance at a wavelength of 350 nm is 4% or more and 14% or less, and the light transmittance at a wavelength of 400 nm is 5% or more and 19% or less.

## Description

### Technical Field

The present invention relates to a tube that, for example, supplies a fluid such as ink.

### Background Art

In the related art, for example, in an ink jet printer, inks of respective colors such as cyan, magenta, yellow, and black, are supplied from an ink tank in a printer body to a print head side through tubes, respectively. Among them, a relatively large-sized ink jet printer uses ultraviolet (UV) curable ink by taking advantage of a feature in which ink can instantaneously cured by being irradiated with ultraviolet rays immediately after printing. As described in an example of the related art disclosed in Patent Document 1, in order to reduce arrival of the ultraviolet rays radiated from an ultraviolet irradiation unit in the vicinity of an ink flow path or to shield the ink flowing through the tube from the ultraviolet rays for curing the UV curable ink, an ink tube using black resin to which carbon black or the like is added is used.

### Citation List

### Patent Document

Patent Document 1: JP-A-2004-167968

### Summary of Invention

### Problems to Be Solved by Invention

That is, in the ink jet printer using the UV curable ink, a mechanism for reducing illuminance of ultraviolet rays with respect to an ink supply path including an ink tube is provided, but it is difficult to completely prevent an ink from being cured within the ink tube. In addition, although an inside of a housing of the printer is protected from ultraviolet rays contained in sunlight, fluorescent light, or the like around the printer, a cover of the printer body may be opened during maintenance work of the printer, or the like, and the inside of the housing of the printer is exposed to ultraviolet rays during the opening. In such a case, if the ink within the tube is influenced by ultraviolet rays, the ink is cured within the tube, which causes clogging or the like. In the example of the related art described above, curing of the UV curable ink as described above is prevented by using a black resin in which carbon black having an ultraviolet shielding property is added to a material of the ink tube.

However, in the ink tube using the black resin to which carbon black or the like is added as the related art described above, it cannot be said that shielding of ultraviolet rays is also sufficient and it is difficult to completely eliminate the problem of clogging due to curing of the ink or the like. In addition, since the black resin is used, the ink tube becomes opaque black and it is difficult to check the flow of the ink within the tube from an outside. Therefore, there is a disadvantage that the inside of the tube cannot be checked from the outside of the ink tube when a defect occurs. In addition, in a case where the ink is cured within the tube and adheres to an inner wall of the tube, it is necessary to wash away with a chemical or the like, or to replace the tube with a new tube. Therefore, replacement or maintenance of the tube frequently occurs, which increases a running cost of the ink jet printer.

The invention is made in view of the problems described above and an object of the invention is to provide a tube which can effectively protect a fluid inside thereof from influences of ultraviolet rays and through which the fluid can be viewed from an outside.

### Means for Solving the Problems

The inventor of the present invention conducted intensive studies on a material and a structure of a tube which can effectively protect a fluid inside a tube from influences of ultraviolet rays and through which the fluid can be viewed from the outside. As a result, a tube in which a resin composition, in which a yellow organic pigment and an ultraviolet absorber of an inorganic compound are dispersed so that a standard deviation of a concentration thereof is a specific value or less, is an ultraviolet shielding layer is provided, and it has found that a light transmittance for each specific wavelength is within a certain range and thereby the problem described above can be solved.

In order to achieve the above-object, a tube according to the present invention includes an ultraviolet shielding layer in which a yellow organic pigment and an ultraviolet absorber of an inorganic compound are dispersed, and is characterized in that: the organic pigment and the ultraviolet absorber are dispersed so that a standard deviation σ of a concentration of the organic pigment and the ultraviolet absorber in the resin composition is 0.02% or less; and in a light transmittance converted in terms of wall thickness when the tube is diluted 10 times in volume ratio, the light transmittance at a wavelength of 350 nm is 4% or more and 14% or less, and the light transmittance at a wavelength of 400 nm is 5% or more and 19% or less.

First, the tube of the invention is a tube in which the resin composition, in which the yellow organic pigment and the ultraviolet absorber of the inorganic compound are dispersed, is the ultraviolet shielding layer. Here, the yellow organic pigment is an organic pigment having a yellow hue of 10 R to 5 GY of a Munsell hue circle (20 hues). The yellow organic pigment has a property of mainly absorbing ultraviolet rays of substantially 350 nm or less and a visible light having a short wavelength and allowing the visible light having a relatively long wavelength to pass therethrough. In addition, since it is a tube in which the resin composition, in which the ultraviolet absorber made of the inorganic compound is dispersed, is the ultraviolet shielding layer, for example, zinc oxide has a property of absorbing ultraviolet rays of substantially 380 nm or less. As described above, the pigment described above and the ultraviolet absorber are highly dispersed and thereby a high ultraviolet ray shielding rate is obtained and the visible light is allowed to transmit the tube. Therefore, the ultraviolet ray shielding rate and visibility can be compatible. Furthermore, a known light stabilizer and an antioxidant of the related art, and the like can be used in combination and at least one of them is dispersed together with the yellow organic pigment and the inorganic compound. Therefore, it is possible to suppress deterioration of the tube.

In addition, in the tube of the invention, the yellow organic pigment and the ultraviolet absorber of the inorganic compound are dispersed so that the standard deviation σ of the concentration of the organic pigment and the ultraviolet absorber in the resin composition is 0.02% or less. In a usual extruding molding method, it seems to be uniformly dispersed at first glance, but the standard deviation **σ** of the concentration of the yellow organic pigment and the ultraviolet absorber is greater than 0.02% and a dispersion state of the ultraviolet absorber and the yellow organic pigment is not sufficient. Therefore, locally high and low portions of the ultraviolet shielding effect exist and a polymerization reaction of ink is started by ultraviolet rays transmitted from the low portion of the ultraviolet shielding effect. Thus, the polymerization reaction affects the whole ink. In the tube of the invention, the standard deviation σ of the concentration of the yellow organic pigment and the ultraviolet absorber is 0.02 or less. Therefore, the ultraviolet shielding effect of the ultraviolet absorber and the yellow organic pigment is sufficiently exhibited and it is possible to prevent ink curing with a small addition amount. In general, in a case where a pigment or the like is used for extrusion molding of a resin, a master batch, which is obtained by applying a treatment for improving dispersibility in the pigment and kneading the pigment into a resin at a high concentration to be pellet, is used. Normally, when molding a tube, a blend of the master batch and the resin is charged into a single screw extruder and molded, but dispersion of the pigment and the ultraviolet absorber is not sufficient only thereby and effects of the invention cannot be obtained. In the tube of the invention, the master batch is used, a blended resin is further kneaded in a twin-screw extruder to mold a pellet, and dispersion is improved to mold a tube by utilizing an extruder using a Dulmage screw. Therefore, the standard deviation σ of the concentration of the yellow organic pigment and the ultraviolet absorber can be 0.02% or less.

Furthermore, in the tube of the invention, in a light transmittance converted in terms of wall thickness when the tube is diluted 10 times in volume ratio, the light transmittance at a wavelength of 350 nm is 4% or more and 14% or less, and the light transmittance at a wavelength of 400 nm is 5% or more and 19% or less. This is defined as "when the tube is diluted 10 times in volume ratio" because a difference in effect becomes clear by being diluted by 10 times and it is possible to determine ink curing resistance of the resin composition obtained by blending the UV absorber and the pigment by measuring the transmittance. As a resin for diluting a tube, a resin used as a base of a tube to be diluted is used. As a specific method, (1) in a case where a tube is a single layer tube, the tube is cut out, a volume is measured, and a material, which is obtained by mixing the tube and a base resin having a volume 9 times thereof, is molded to a film having the same thickness as a wall thickness of the tube. The light transmittance in a thickness direction is measured using the molded film and a measured value is the light transmittance converted in terms of wall thickness. In a case where the tube is a multi-layer tube, (2) the tube is molded to a film having the same thickness as the wall thickness of the tube by diluting 10 times in the same method as that of the single layer tube, or (3) only an ultraviolet shielding layer is cut out, a volume thereof is measured, the ultraviolet shielding layer is mixed with a resin used as a base of the ultraviolet shielding layer, is diluted 10 times in volume ratio, and then is molded into a film having the same thickness as the wall thickness of the ultraviolet shielding layer. The light transmittance in the thickness direction is measured using the molded film and the measured value is the light transmittance converted in terms of wall thickness.

In a case where it is difficult to mold a film having the same thickness as the wall thickness of the tube or the wall thickness of the ultraviolet shielding layer, a resin that is obtained by diluting 10 times is molded to a film having a thickness of 0.25 mm and the light transmittance in the thickness direction is measured using the molded film. A measured value of the light transmittance of the film having the thickness of 0.25 mm can be converted into the light transmittance of the wall thickness of the tube or the wall thickness of the ultraviolet shielding layer by applying a Lambert-Beer's law. The light transmittance converted in terms of wall thickness of the tube or the wall thickness of the ultraviolet shielding layer is the light transmittance converted in terms of wall thickness.

The reason why the light transmittance at a wavelength of 350 nm is 4% or more and 14% or less is that when the transmittance is higher than 14%, a substantial concentration of the ultraviolet absorber is mainly too low, ultraviolet rays are allowed to transmit, energy of transmitted ultraviolet rays is absorbed, and curing of the ink starts. On the other hand, when the transmittance is lower than 4%, a substantial concentration of the ultraviolet absorber is mainly too high and visibility of the tube contents is hindered. Visibility is not hindered and ink curing can be prevented by the configuration.

The reason why the light transmittance at a wavelength of 400 nm is 5% or more and 19% or less is that when the transmittance is higher than 19%, a substantial concentration of the yellow organic pigment is mainly too low, ultraviolet rays are allowed to transmit, energy of transmitted ultraviolet rays is absorbed, and curing of the ink starts. On the other hand, when the transmittance is lower than 5%, a substantial concentration of the yellow organic pigment is mainly too high and visibility of the tube contents is hindered. Visibility is not hindered and ink curing can be prevented by the configuration.

### Brief Description of Drawings

Fig. 1 is a perspective view illustrating a tube of a first embodiment of the invention.
Fig. 2 is a view for explaining a method of an ink curing test performed on a film of a resin composition used for an ultraviolet shielding layer of the tube of the first embodiment of the invention.
Fig. 3 is a perspective view illustrating a tube of a second embodiment of the invention, in which Fig. 3(a) illustrates a tube of a three-layer structure and Fig. 3(b) is a tube of a two-layer structure.

### Embodiments for Carrying Out the Invention

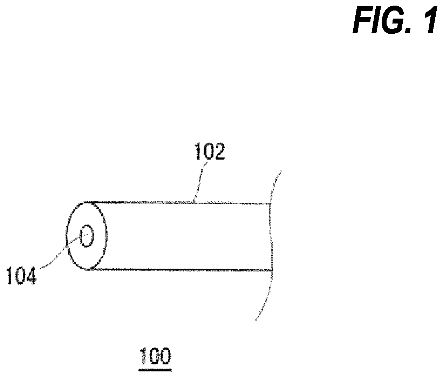

Embodiments described below are not intended to limit the invention according to the claim and all combinations of features described in the embodiments are not necessarily indispensable for establishment of the invention. Fig. 1 is a perspective view illustrating a tube of a first embodiment of the invention. The tube of the invention is used as a tube for supplying ink of each color such as cyan, magenta, yellow, and black from ink tanks within a printer body, for example, in an ink jet printer. A layer structure of the tube is mainly illustrated in Fig. 1. An entirety in a length direction of the tube, or a configuration of an ink jet printer side, which is independent of an essence of the invention, that is, a configuration of an ink tank side or a print head side on which the tube is mounted is omitted.

As illustrated in Fig. 1, a tube 100 is a tube of a single layer structure configured of a tube layer 102 made of the ultraviolet (UV) shielding soft resin. Reference numeral 104 indicates a tube internal cavity. Here, the tube layer 102, in which a resin composition, in which a yellow organic pigment and the ultraviolet absorber made of the inorganic compound are dispersed, is the ultraviolet shielding layer, is provided. The ultraviolet shielding layer is dispersed so that a standard deviation **σ** of the concentration of the organic pigment and the ultraviolet absorber in the resin composition is 0.02% or less. In a light transmittance converted in terms of wall thickness when the tube is diluted 10 times in volume ratio, the light transmittance at a wavelength of 350 nm is 4% or more and 14% or less, and the light transmittance at a wavelength of 400 nm is 5% or more and 19% or less.

As described above, the inventor of the invention conducted various and intensive studies on a material and a structure of the tube. As a result, the yellow organic pigment and the ultraviolet absorber made of the inorganic compound are dispersed so that the standard deviation **σ** of the concentration thereof is 0.02% or less. In the light transmittance converted in terms of wall thickness when the tube is diluted 10 times in volume ratio, the light transmittance at the wavelength of 350 nm is 4% or more and 14% or less, and the light transmittance at the wavelength of 400 nm is 5% or more and 19% or less. Therefore, a fluid inside the tube can be effectively protected from influences of ultraviolet rays and the fluid can be viewed from an outside through the tube. Hereinafter, experiments and the like which are performed as verification will be described.

Table 1 illustrates results in which a light transmittance, an ink curing test, and a visibility test are performed for films of Examples 1 to 11 in which values of respective configuration elements were varied with respect to films of the resin composition used for the ultraviolet shielding layer of the tube of the invention described above and the like, and films for Comparative Examples 1 to 8 having no configuration of the invention.

**Table 1**

| | LDPE | Pigment Component | Zinc Oxide Component | Titanium Oxide Component | Black Pigment Master Batch | Light Transmittance of Film Diluted by 10 times [%] | | | Ink Curing Test | Visibility | Standard Deviation σ of Concentration |
|---|---|---|---|---|---|---|---|---|---|---|---|
| | | | | | | 350nm | 400nm | 650nm | | | |
| Example 1 | 100 | 0.128 | 1.2 | | | 12.4 | 17.2 | 62.3 | A | A | 0.01485 |
| Example 2 | 100 | 0.128 | 0.8 | | | 12.2 | 14.7 | 60.3 | A | A | 0.00901 |
| Example 3 | 100 | 0.16 | 1 | | | 8.8 | 10.4 | 56.8 | A | A | 0.01061 |
| Example 4 | 100 | 0.192 | 1.2 | | | 7.8 | 9.5 | 55.3 | A | A | 0.00536 |
| Example 5 | 100 | 0.192 | 0.8 | | | 8.7 | 8.8 | 56.8 | A | A | 0.00974 |
| Example 6 | 100 | 0.224 | 0.6 | | | 8.3 | 6.8 | 54.9 | A | A | 0.00326 |
| Example 7 | 100 | 0.096 | | 0.6 | | 6.9 | 5.5 | 30.4 | A | A | 0.01289 |
| Example 8 | 100 | 0.128 | | 0.8 | | 9.1 | 7.1 | 33.9 | A | A | 0.01901 |
| Example 9 | 100 | 0.16 | 1 | | | 11.6 | 17.2 | 50.6 | A | A | 0.00471 |
| Example 10 | 100 | 0.192 | 1.2 | | | 10.5 | 15.9 | 54.1 | A | A | 0.01605 |
| Example 11 | 100 | 0.192 | 1.2 | | | 9.3 | 16.6 | 58.0 | A | A | 0.00993 |
| Comparative Example 1 | 100 | 0.096 | 1.6 | | | 10.7 | 19.6 | 61.5 | B | A | 0.00833 |
| Comparative Example 2 | 100 | 0.096 | 0.6 | | | 14.5 | 17.5 | 56.0 | C | A | 0.00517 |
| Comparative Example 3 | 100 | 0.224 | 1.6 | | | 3.6 | 5.1 | 44.8 | A | B | 0.01526 |
| Comparative Example 4 | 100 | 0.192 | | 1.2 | | 4.6 | 2.6 | 22.8 | A | B | 0.01877 |
| Comparative Example 5 | 100 | 0.128 | 0.8 | | | 13.5 | 19.4 | 53.2 | C | A | 0.01348 |
| Comparative Example 6 | 100 | 0.16 | 1 | | | 11.8 | 19.3 | 60.0 | C | A | 0.01211 |
| Comparative Example 7 | 100 | 0 | 0 | | 0.5 | 15.5 | 20.7 | 42.0 | C | C | |
| Comparative Example 8 | 100 | 0.16 | 1 | | | 17.2 | 22.7 | 57.7 | C | A | 0.3816 |

As a preparing method of each sample of Examples 1 to 11 and Comparative Examples 1 to 8, the single layer tube (see Fig. 1) of φ3×φ3.5 was molded.

Details of the preparing method of each sample are as follows.

### (A) Used Material

(1) For Examples 1 to 6, Comparative Examples 1 to 3, and Comparative Example 8, modified LDPE Modic L502 manufactured by Mitsubishi Chemical Corporation as low density polyethylene (LDPE), a yellow pigment (hue H: 5Y) master batch, and a zinc oxide master batch (average particle diameter: 0.2 µm)
(2) For Examples 7 and 8, and Comparative Example 4, modified LDPE Modic L502 manufactured by Mitsubishi Chemical Corporation as low density polyethylene (LDPE), a yellow pigment (hue H: 5Y) master batch, and titanium oxide (average particle diameter 0.2 µm)
(3) For Examples 9 and 10, and Comparative Example 5, modified LDPE Modic L502 manufactured by Mitsubishi Chemical Corporation as low density polyethylene (LDPE), a yellow pigment (Hue H: 5YR) master batch, and a zinc oxide master batch (average particle diameter 0.2 µm)
(4) For Example 11 and Comparative Example 6, modified LDPE Modic L502 manufactured by Mitsubishi Chemical Corporation as low density polyethylene (LDPE), yellow pigment (hue H: 10Y) master batch, and a zinc oxide master batch (average particle diameter 0.2 µm)
(5) For Comparative Example 7, modified LDPE Modic L502 manufactured by Mitsubishi Chemical Corporation as low density polyethylene (LDPE), and a black pigment master batch

### (B) Production of Tube Molding Material

Each raw material described in (A) was placed in a container, mixed, and used.
(1) In Examples 1 to 11 and Comparative Examples 1 to 6, the resin blended in a container was melt-kneaded at 150°C using a twin-screw extruder (bore diameter 20 mm, manufactured by TECHNOBEL Corp.) and pelletized.
(2) In Comparative Examples 7 and 8, those blended in containers were directly used for molding.

### (C) Tube Molding

(1) In Examples 1 to 11 and Comparative Examples 1 to 6, a single layer tube was molded with a single screw extruder (bore diameter 30 mm and L/D=28). The screw used a dull-kneading screw to increase the dispersion of pigment and ultraviolet absorber.
(2) In Comparative Examples 7 and 8, a single layer tube was molded with a single screw extruder (bore diameter 30 mm and L/D=28). For the screw, a full flight screw used for general molding was used.

### (D) Preparation of Sample Film

The tube molded in (C) was crushed, melted by a heat press at 160°C to form a film having a thickness of 0.25 mm.

Next, in order to prepare a sample for measuring the light transmittance, the tube molded in (C) described above was cut out, a volume was measured, crushed, mixed with a base resin having a volume of 9 times the tube, and kneaded using a kneader (manufactured by Toyo Seiki Seisaku-sho, Laboplast Mill) at 140°C for 15 minutes to obtain a sample. The obtained sample was melted by a heat press at 160°C to mold a 0.25 mm film having the same thickness as the tube wall thickness. As a measuring method of the light transmittance, the light transmittance of a film diluted by 10 times by volume ratio was measured using an ultraviolet-visible spectrophotometer UV-1200 manufactured by Shimadzu Corporation.

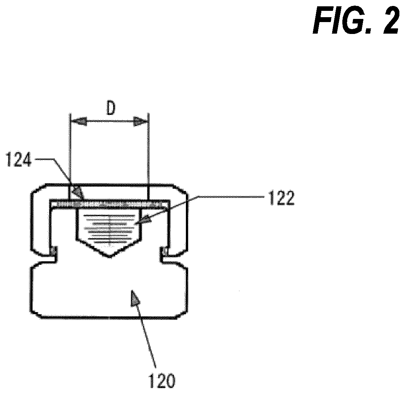

Ink Curing Test An UV curable ink (cyan) was placed in a stainless steel pot illustrated in FIG. 2 and covered with a sample film (0.25 mm). The sample stayed outdoors on a clear day, one day and night. After this test, the curing degree of the UV curable ink was evaluated as A: no change, B: gelation, and C: curing. In FIG. 2, D indicates an opening, 120 indicates a pot body, 122 indicates a UV curable ink, and 124 indicates a UV shielding soft resin film.

Visibility Test A sample film (0.25 mm) was placed on white paper printed with cyan, magenta and yellow lines (thickness 0.7 mm), and evaluation was performed whether lines can be recognized in a state of being separated by 300 mm in a bright room. Evaluation criteria were classified into the following three. A: The lines of all colors could be recognized. B: The yellow line cannot be recognized. C: The lines of all colors cannot be recognized.

### Standard Deviation of Additive Concentration

In the examples and the comparative examples, the concentration of the ultraviolet absorber made of the inorganic compound was measured as a marker for measuring a dispersion state, and the standard deviation thereof was calculated.

A sample tube was crushed, a sheet having a thickness of 2 mm was prepared by a heat press method (160°C), and the element concentration was analyzed by X-ray analysis microscope XGT 5000 WR manufactured by Horiba Seisakusho. In this X-ray analysis microscope, a beam diameter was 1.2 mm, a measurement time was 100 sec, and the measurement was carried out at 10 points in a range of approximately 40 mm×40 mm, and the standard deviation thereof was calculated. In Examples 1 to 6, 9 to 11 and Comparative Examples 1 to 3, 5, 6, and 8, zinc oxide was used, and in Examples 7 and 8 and Comparative Example 4, titanium oxide was used as a marker for measurement.

### [Discussion on Table 1]

In Examples 1 to 6 and 9 to 11, a substantial concentration of the yellow pigment and the ultraviolet absorber (zinc oxide) was appropriate, and the curing of the ink did not occur. In addition, sufficient visibility was obtained. When the hue of the yellow organic pigment is different, the concentration range in which both UV shielding effect and visibility can be compatible is different but almost the same effect was shown.

In Examples 7 and 8, titanium oxide was used instead of zinc oxide as the ultraviolet absorber made of an inorganic compound. Like zinc oxide, curing of the ink can be prevented and visibility was also obtained. In Examples 7 and 8 in which titanium oxide was dispersed with the yellow organic pigment, UV shielding at a wavelength of 400 nm was particularly effective and visibility was also obtained.

In Comparative Examples 1, 2, 5, and 6, a substantial concentration of the yellow organic pigment was mainly insufficient, and curing of the ink occurred.

In Comparative Example 3, the substantial concentration of the yellow organic pigment and the ultraviolet absorber (zinc oxide) was excessive, and it was possible to prevent curing of the ink, but visibility was not obtained.

In Comparative Example 4, the substantial concentration of the yellow organic pigment and the ultraviolet absorber (titanium oxide) was excessive and it was possible to prevent curing of the ink, but visibility was not obtained.

Since Comparative Example 7 corresponds to a black resin tube or the related art, curing of the ink occurred and visibility was not obtained either.

In Comparative Example 8, the same compounding ratio as in Example 3 was molded by a conventional method, the dispersion was insufficient, the ultraviolet shielding effect of the ink was not sufficiently exhibited, and curing of the ink occurred. That is, even when the tube is exposed to strong ultraviolet rays such as sunlight, in order to obtain a sufficient ultraviolet shielding effect that does not affect the ink inside the tube even and visibility that can confirm the fluid inside the tube, it is important that the pigment and the ultraviolet absorber are uniformly and highly dispersed.

Next, a second embodiment of the invention will be described. That is, it is possible to form a multi-layer structure by laminating the resin composition and resin having necessary properties. For example, the tube of the invention may have a multi-layer structure using a fluororesin for an inner layer and the above resin composition for an outer layer.

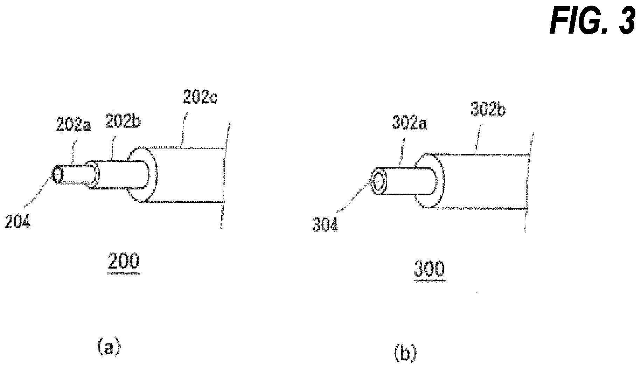

Fig. 3 is a perspective view illustrating a tube of a second embodiment of the invention, in which Fig. 3(a) illustrates a tube of a three-layer structure and Fig. 3(b) is a tube of a two-layer structure.

A tube 200 of Fig. 3(a) is configured as a three-layer structure having an inner layer 202a, an adhesive layer 202b, and an outer layer 202c. The inner layer 202a uses a fluororesin and the outer layer 202c uses the same resin composition as that of the first embodiment described above. Reference numeral 204 is a tube internal cavity. In addition, as illustrated in Fig. 3(b), as a modification example of the second embodiment, a tube 300 may have a two-layer structure having an inner layer 302a and an outer layer 302b. Reference numeral 304 is a tube internal cavity.

For the multi-layer tube of the second embodiment as well, ink curing test and visibility test were carried out using a UV lamp and sunlight. Test results thereof are shown in Table 2.

**Table 2**

| | Ink Curing Test Using UV lamp | | | Ink Curing Test Using Sunlight | | Visibility |
|---|---|---|---|---|---|---|
| | 2 Hours | 24 Hours | 840 Hours | 2 Hours | 1 Day | |
| Example 12 | A | A | A | A | A | A |
| Example 13 | A | A | A | A | A | A |
| Example 14 | A | A | A | A | A | A |
| Comparative Example 9 | B | C | - | C | C | A |

As a method of molding the multi-layer tube, co-extrusion molding was carried out using the resin having the composition shown in Table 1 as a material of the outer layer (202c). In Examples 12, 13, and 14, the compositions of Examples 2, 3, and 4 were used, and in Comparative Example 9, the composition of Comparative Example 2 was used. The outer layer 202c was formed to have an outer diameter of φ3.8×inner diameter of φ3.0 and a wall thickness of 0.25 mm. Bondfast 2C manufactured by Sumitomo Chemical Co., Ltd. was used for the adhesive layer 202b. Barrier fluororesin Neoflon CPT LP 1000 manufactured by Daikin was used for the inner layer 202a.

Ink Curing Test In ink curing test using UV lamp, a multi-layer tube of 100 mm was filled with UV curable ink (cyan) and both ends were sealed. In order to evaluate the ultraviolet shielding property, a handy UV lamp LUV-16 (wavelength 365 nm) manufactured by AS ONE Corporation irradiated the tube at a distance of 100 mm. After 2 hours, 24 hours, and 840 hours, the ink in the tube was lightly washed, then the tube was cut and a degree of curing of the ink was evaluated according to the following criteria. A: no cured ink, B: ink cured on a part of the wall surface is present, C: ink cured in an entire inside of the tube is present. The ink curing test by sunlight is performed in the same manner as the ink curing test of the first embodiment. The UV curable ink (cyan) was put in a pot made of stainless steel illustrated in FIG. 2 and covered with a sample film. Then, the sample stayed outdoors on a clear day, two hours and one day (one day and night). After each elapse of time, the curing degree of the UV curable ink was evaluated as A: no change, B: gelation, and C: curing.

### Visibility Test

Transparent water and air were alternately flowed into the tube, and evaluation was performed whether or not the boundary between water and air could be visually recognized according to the following criteria.
A: Boundary of air was visually recognized.
C: Boundary of air could not be visually recognized.

### [Consideration of Test Results in Table 2]

In the first embodiment shown in Table 1, the ink curing test and the visibility test on the film were conducted. The results confirmed in the ink curing test and the visibility test in the state of being formed into a multi-layer tube were the same as those confirmed in the state of the film in Table 1.

As a third embodiment of the invention, in the tube of the second embodiment described above, the fluororesin of the inner layer has ink barrier properties and an ink permeability of the entire tube at 60°C can be 1% or less.

In order to confirm the effect of the embodiment, the ink permeation test of the multi-layer tube was also conducted. That is, the multi-layer tube was filled with ink, both ends were sealed, and the change in weight of the ink was measured after a certain period of time.

Specifically, as Example 13 in Table 2 and as new Comparative Example 10, a tube of φ3×φ3.8 of 500 mm was filled with the UV curable ink, both ends were sealed, and left at 60°C for 1 week, and then a weight change of the ink was measured.

In Comparative Example 10, a tube was constituted by a multi-layer tube in which an inner layer was changed to adhesive ETFE, and the outer layer of the tube of Example 13 was changed to a thermoplastic urethane, respectively.

After one week, the weight of the ink decreased by 0.16% in Example 13 and 1.79% in Comparative Example 10.

### [Consideration of Test Results]

In Example 13, since the ink barrier fluororesin was used as the inner layer, the weight change of the ink was smaller than that of Comparative Example 10, and the ink permeability could be suppressed.

In addition, as in the third embodiment of the invention, the ink permeability of the entire tube per week at 60°C is 1% or less per 500 mm of the tube length. Therefore, it is possible to suppress the ink permeability as much as possible and to prevent the ink from being reduced. That is, the ink permeability can be reduced and the reduction of ink can be prevented while obtaining the visibility described above.

In the above embodiment, for the UV curable ink used for the ink jet printer and the like, the ultraviolet shielding property and visibility of the tube were examined. Of course, the tube of the invention is not limited to these applications. In addition to the UV curable ink, it may be a tube through which a fluid, which may be deteriorated by ultraviolet rays, flows. In addition, even if it is not a liquid in a strict sense, such as liquid or gas, it is also possible to be extended and applied to a case of flow of a fluid which may be deteriorated by ultraviolet rays through the inside of the tube. Furthermore, it is understood that the concept of the invention can be extended to a tubular body other than the tube and a film packaging material.

### Industrial Applicability

The invention can be broadly applied regardless of its size, material, or application, as long as it is a tube having the configuration of the claim. Reference Signs List

- 100, 200, 300: tube
- 102: tube layer
- 104, 204, 304: tube internal cavity
- 202a, 302a: inner layer
- 202b: adhesive layer
- 202c, 302b: outer layer

## Claims

1. A tube comprising an ultraviolet shielding layer wherein a yellow organic pigment and an ultraviolet absorber of an inorganic compound are dispersed,
wherein the organic pigment and the ultraviolet absorber are dispersed so that a standard deviation **σ** of a concentration of the organic pigment and the ultraviolet absorber in the resin composition is 0.02% or less, and
wherein in a light transmittance converted in terms of wall thickness when the tube is diluted 10 times in volume ratio,
the light transmittance at a wavelength of 350 nm is 4% or more and 14% or less, and
the light transmittance at a wavelength of 400 nm is 5% or more and 19% or less.
